# EUROPEAN PATENT APPLICATION

(11) **EP 3 401 799 A1**
(43) Date of publication of application: **14.11.2018**
(21) Application number: 17170931.4
(22) Date of filing: 12.05.2017
(51) Int. Cl.: G06F 17/30

(54) **DATA STORAGE METHOD AND APPARATUS**

(71) Applicant: Sage Global Services Limited, Newcastle upon Tyne, Tyne and Wear NE13 9AA (GB)
(72) Inventor: HULME, John Richard, Tyne and Wear, NE3 4YS (GB); GUTIÉRREZ MORERA, Ramón, 08208 Sabadell (ES); VOGELBERG, Klaus-Michael, Hexham, Northumberland NE46 4AG (GB)
(74) Representative: HGF Limited

(57) **Abstract**

Embodiments of the present invention provide a method (400) of storing transaction data, comprising receiving (410), at a server computer (120) from a user computer (110), a posting request (500) comprising transaction data from the client computer (110), selecting (430), from a posting rule data store (123), one or more posting rules in dependence on an identity associated with the client computer (110) and the posting request (500), wherein at least one posting rule identifies one or more layers of a data storage structure (320) at the server computer (120) to which the transaction data (500) is to be posted, and posting (460) the transaction data to the selected one or more layers (320) according to the one or more posting rules.

## Description

### Background

It is often desired to store and process data in a distributed system. However, over a period time requirements for the storage of the data may change. Is it desired to provide a convenient way to manage such data storage requirements. Furthermore, some embodiments address problems associated with data storage structures into which the data is stored.

It is an object of embodiments of the invention to at least mitigate one or more of the problems of the prior art.

### Brief Description of the Drawings

Embodiments of the invention will now be described by way of example only, with reference to the accompanying figures, in which:
Figure 1 shows a system according to an embodiment of the invention;
Figure 2 shows a schematic illustration of a system according to an embodiment of the invention;
Figure 3 shows a further schematic illustration of the system according to an embodiment of the invention;
Figure 4 shows a method according to an embodiment of the invention; and
Figure 5 shows an illustration of a transaction object according to an embodiment of the invention.

### Detailed Description of Embodiments of the Invention

Embodiments of the present invention provide a data storage method and apparatus. Embodiments of the present invention allow transaction data to be flexibly recorded according to one or more rules. The one or more rules may be selected, at least in part, according to an identity associated with a device, such as a computer, providing the transaction data. In embodiments of the invention the transaction data may be recorded to a plurality of data storage layers according to the one or more selected rules, as will be explained.

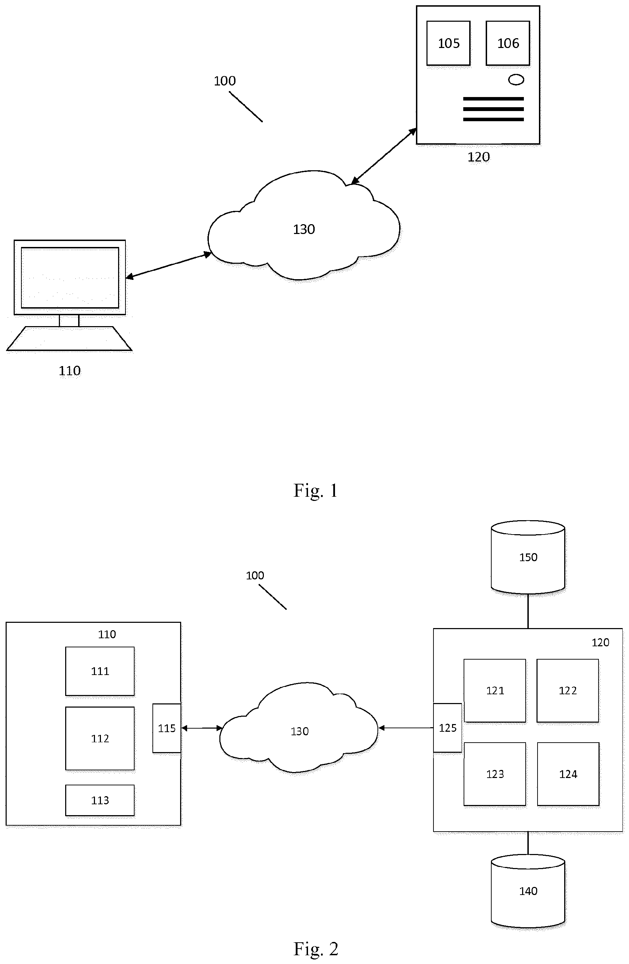

Figure 1 illustrates a system 100 according to an embodiment of the invention. The system 100 comprises a first device 110 which may be a computer, hereinafter referred to as a user computer 110, and a second computing apparatus such as a computer, hereinafter referred to as a server computer 120. The first device 110 may be a portable computing device such as a smartphone, tablet, laptop etc. The first device 110 may be a desktop computing device. The user computer 110 represents a client computer 110 to the server computer 120.

Each of the user computer 110 and server computer 120 may comprise one or more processors arranged to operably execute computer software thereon, where the computer software is stored in a computer-readable medium accessible to each of the one or more processors. The computer-readable medium may be one or more memory devices, where the memory may also store data for use by the software. The computer-readable medium may tangibly store the computer software in a non-transitory format. During use the one or more memory devices may store data for performing a method according to an embodiment of the invention. For example, a memory device of the first device 110 may store data entered by a user of the first device 110. The server 120 is illustrated in Figure 1 as comprising a processor 105 and a memory 106. The processor 105 may be electronic processing device arranged to carry out instructions as defined in the memory 106. It will also be appreciated that the user computer 110 may comprise a processor and memory although not specifically illustrated.

The user computer 110 and server computer 120 are communicably coupled by a computer network 130. The computer network 130 may comprise one or more networks, such as Local Area Networks (LANs), and the Internet. The server computer 120 may provide a service to the user computer 110 via the network 130. The service may be provided via one or more web pages where the user computer 110 operably executes software for interpreting web pages, such as a web browser, where the web pages may include mark-up language such as HTML. However, in other embodiments, the user computer 110 may execute a software application which is arranged to communicate with counterpart software executing on the server computer 120.

As will be further explained, data may be provided to the server computer 120 from the user computer 110 in a variety of ways. In some embodiments the user computer 110 may provide data to the server computer 120 via an interface 125 of the server computer 120. The user computer 110 may comprise a corresponding interface 115 via which the computers 110, 120 communicate to exchange data. The interface 125 may specify data to be provided from the user computer 110 to the server computer 120. In other embodiments, a form may be provided from the server computer 120 to the user computer 110 where the form specifies data to be entered by the user when a representation thereof is displayed by the user computer 110 to the user. The form is populated at the user computer 110 and the completed form, or at least data entered into the form, is communicated to the server computer 120.

In embodiments of the invention, such as in both of the interface and form embodiments, data received at the server computer 120 is used to create a transaction object at the server computer 120. In other embodiments, the transaction object may be created at the user computer 110 and communicated to the server computer 120. At the server computer, the transaction object (either created at the server computer 120 or received by the server computer 120) stores the transaction object in memory. The transaction object represents a posting request. The posting request is a request to post or enter data a data store at the server computer 120, as will be explained.

Referring to Figure 2, which schematically illustrates the system 100 shown in Figure 1, the user computer 110 comprises a user interface 111. The user interface 111 is provided for outputting data to a user of the computer 110 and for receiving an input from the user of the computer 110. User interface 111 may comprise an output device, which is arranged to output data to the user, such as a display device for visually outputting data thereon or an audio device for audibly outputting a representation of data (other types of output device may be envisaged) and one or more user input devices which may comprise one or more of a keyboard, a pointing device, such as a touchpad or mouse, or other user input device. In some embodiments, the output device and at least some of the user input devices may be integrated, such as in the form of a touch-screen display device which is capable of visually outputting data and receiving the user's input.

The user computer 110 operably executes a transaction module 112, which may be implemented in software in some embodiments, wherein the software is operably executed on the processor of the user computer 110. The transaction module 112 is operative to communicate transaction data from the user computer 110 to the server computer 120, as will be explained. The user computer 110 operably stores user identity information 113. The user identity information 113 uniquely identifies one or both of the user of the user computer 110 and the user computer 110 itself. The user identity information 113 may be entered into the user computer 110 or may have been provided to the user computer 110 from a device associated with the user, such as a key code generator. It will be appreciated that the user identity information 113 may be provided to the user computer 110 in other ways. Thus, as a result of the user identity information 113, the user computer 110 may communicate data to the server computer 120 which is identified to the server computer 120 as being associated with one or both of the user of the user computer 110 and the user computer 110. As noted above, the data provided from the user computer 110 is used, in some embodiments, to create a transaction object at the server computer 120. In other embodiments, the user computer 110 creates the transaction object which is provided to the server computer 120 i.e. the transaction object may be communicated from the user computer 110 to the server computer 120.

The server computer 120 is arranged to post data to, i.e. to cause data to be stored within, a data store 140 associated with the server computer 120. The data store 140 may be communicably coupled to the server computer 120, or may comprised within the server computer 120.

The server computer 120 comprises a posting engine 121. The posting engine 121 is arranged to, in use, receive the transaction data from the user computer 110 and to post the transaction to a data storage structure stored within the data store 140. The posting engine 121 posts the transaction data to the data storage structure according to one or more posting rules, as will be explained. Each posting rule provides a definition identifying how the transaction data received from the user computer 110 is entered into the data storage structure. Each posting rule may be in a predetermined format, such as being represented by a document or file which is configurable by the user of the user computer 110. Each posting rule may, in some embodiments, be stored in an extensible markup language (XML) format, although it will be appreciated that other formats may be used. In some embodiments, each posting rule may be stored in a data storage structure such as a database as a record in the database, as will be explained. Posting rule templates may be stored as objects, such as JSON objects.

The server computer 120 comprises a posting rule template (PRT) store 122 and a configured posting rule (CPR) store 123. The PRT store 122 and the CPR store 123 may be associated with a memory of the server computer 120. The PRT store 122 stores one or more posting rule templates for configuration. The PRT store 122 may comprise one or more posting rule template files. Each template file may be a JSON object in one embodiment, as noted above. Configuration of the posting rule templates may be performed by a user of the user computer 110. The CPR store 123 stores one or more posting rules configured by the user of the user computer 110 i.e. configured posting rules. To configure the one or more posting rules, the server computer 120 may receive from the client computer 110 metadata corresponding to the configuration of the one or more posting rules. The server computer 120 may store the received metadata in the CPR store 123. The CPR store 123 may be a database, as noted above, which stores the configured posting rules as records in the database.

As the server computer 120 may be communicable with a plurality of user computers 110, each configured posting rule may be associated with one or more users. Each configured posting rule may be associated with the user identity information 113 of the user computer 110. In this way, at least some configured posting rules may only be utilised by the user computer 110 having configured said posting rules. However some configured posting rules may be shared between a plurality of user computers. For example, some configured posting rules may have been configured by the provider of the server computer 120 for use by all users.

The provision of the PRT store 122 advantageously reduces a burden on the user of the user computer 110 formulating a desired posting rule from scratch. One or a plurality of template posting rules may be stored, in some embodiments, in a readonly format, in the PRT store 122 which may be configured by the user of the user computer 110, such as by supplementing the template posting rule with one or more attributes or values. Once configured, the configured posting rule is stored in the CPR store 123 associated with the user identity information 113 of the user computer 110 for later use. Use of the posting rules will be explained further.

The posting engine 121 is operative to post data to the data storage structure stored in the data store 140 according to one or more selected posting rules, as will be explained. The one or more selected posting rules may be a posting rule selected from the CPR store 123.

The server computer 150 may, in some embodiments, be communicably coupled to one or more further data stores 150 which contain data which may be used by the posting engine 121. That is, the posting engine 121 may obtain data from the one or further data stores, which may be used by the posting engine 121, as will be explained. The one or more further data stores may store, for example, transaction data, payment data, commerce data etc. The posting engine 121 may obtain data from the one or more further data stores for storage in the data store 140 of the obtained data or data derived there-from.

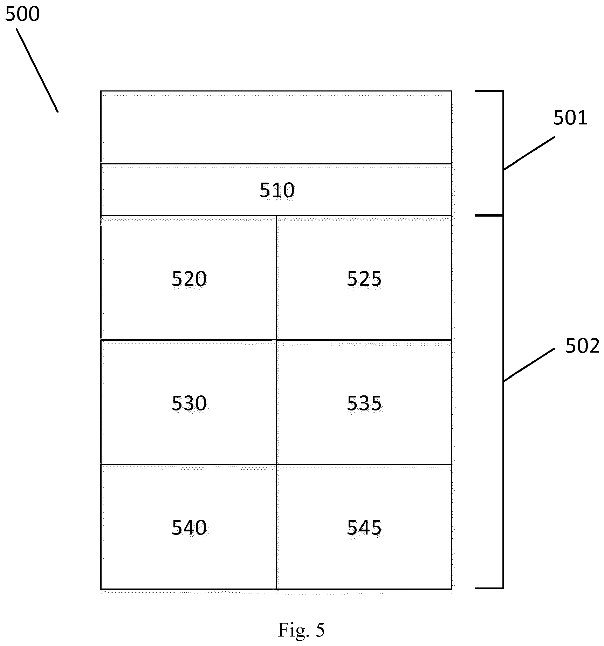

In some embodiments, the server computer 150 comprises a transaction object module (TOM) 124. The TOM 124 is arranged to operatively create transaction objects (TOs). A transaction object is created from data received from the user computer 110. A TO 500 according to an embodiment of the invention is illustrated in Figure 5. The illustrated TO comprises a TO header part 501 and a TO item part 502. The header part 501 of the TO 500 comprises one or more items of information. The one or more items of information in the header part may be associated with every TO 500, such as general information associated with the TO 500. The header part 501 may store date information, identification information associated with the TO 500 etc. The header part 501 comprises a transaction type identifier 510. Each TO 500 may be one of a plurality of different transaction types. The transaction type identifier 510 an indicative of the type of transaction. As will be described, in some embodiments the transaction type identifier is used to select one or more posting rules to be applied to the TO 500.

The TO item part 502 stores one or more items of transaction data, wherein at least some of the transaction data is unique to the transaction represented by the TO 500. In Figure 5 the TO 500 comprises three transaction items 520, 530, 540 wherein each transaction item 520, 530, 540 comprises an indication of a type of the transaction item and a transaction item value 525, 535, 545. The type of the transaction item 520, 530, 540 may be selected from one of a plurality of predetermined types. The values of the one or more transaction items correspond to data received from the user computer 110 in some embodiments. Some of the transaction item values 525, 535, 545 correspond to transaction data, i.e. data values, desired to be stored in the data storage structure 320. Whilst the above description relates to the server computer 150 comprising the TOM 124 which operatively creates the TO 500, it will be appreciated that in some embodiments the user computer 110 may create the TO 500 or a representation of the TO 500, as discussed further below. Thus in such embodiments the TOM 124 may be operated by the user computer 110, such as via an API call.

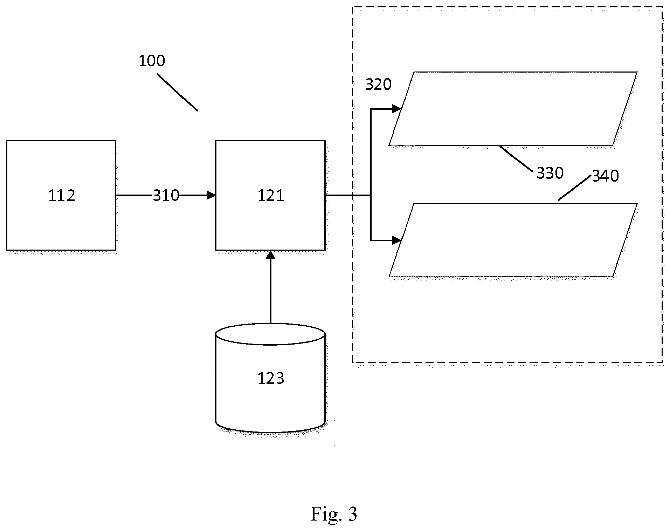

Figure 3 further schematically illustrates the system 100 according to an embodiment of the invention. In addition to components previously introduced in Figures 1 & 2, Figure 3 illustrates a data structure 320 according to an embodiment of the invention which is stored in the data store 140. The data structure 320 is a transaction data structure 320 for storing transaction data, and data derived there-from, associated with respective user identity information 113. The transaction data structure 320 may be referred to as a transaction log or transaction register. As illustrated in Figure 3, the transaction data structure 320 may comprise a plurality of layers 330, 340. Each layer provides a respective representation of at least some of the transaction data. The transaction data structure 320 illustrated in Figure 3 comprises a first layer 330 and a second layer 340. However it will be appreciated that the transaction data structure 320 may store more than two layers 330, 340. Each layer 320, 330 allows a respective representation of transaction data, or data derived there-from, to be stored in the transaction data structure 320, as will be explained. The provision of the plurality of layers 320, 330 allows data to be differently stored on each layer to enable different processing or reporting on the data.

In some embodiments, each of the layers 330, 340 is a multi-dimensional data storage structure 330, 340. The multidimensional data storage structure allows for storage of the transaction data in two or more dimensions. For example, in some embodiments one or more of the layers 330, 340 is associated with three or more dimensions. Each dimension may represent an attribute of interest associated with the transaction. The dimension may define a class associated with the transaction data i.e. a type of information associated with the transaction data. The attribute associated with each dimension may be configured by the user of the user computer 110 as desired. A data value associated with the transaction may be stored in the data storage structure 320 in each layer 330, 340 at an intersection of each of the plurality of dimensions. For example, a dimension may represent a geographic region of interest. Thus each dimension may be of a particular type e.g. region, country, etc.

Furthermore, in some embodiments, the data structure allows one or more tags or labels to be associated with stored data values. The tag or label may identify the data value to be indicated as being representative of a particular attribute. For example, a tag may be indicative of a geographic region. As will be explained, it is not necessary for the user to manually select a tag. In some embodiments, a posting rule may be used to cause the posting engine 121 to tag a data value in the data structure 320 without user input. A tag may be a specific value from a dimension with which it is associated. For example, a tag may represent a geographic location within the geographic region represented by the dimension. As with the dimensions, each tag may be associated with a type. For example, a tag value may be of type country i.e. defining a particular country.

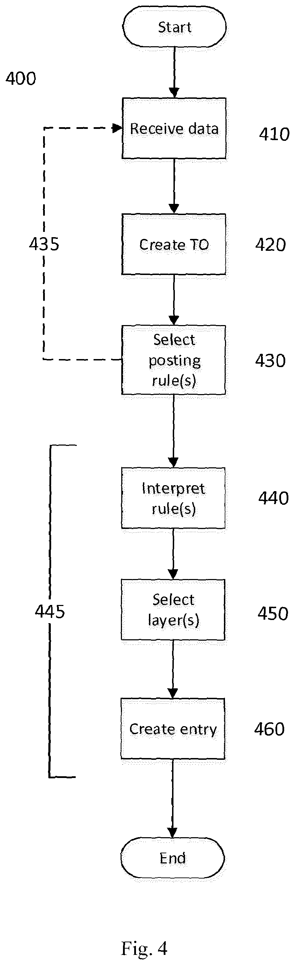

Figure 4 illustrates a method 400 according to an embodiment of the invention. The method 400 is a method of storing data which may be performed by the system 100 illustrated in Figures 1-3 as described above.

The method 400 comprises a step of receiving data in step 410. Step 410 may be performed with respect to the server computer 120 i.e. wherein the data is received at the server computer 120. The data is received at the server computer 120 from the user computer 110. As described above, the data may be received at the server computer 120 via an interface from the user computer 110. Preceding receipt of the data at the server computer the data may have been entered into the user computer 110 by the user and communicated to the server computer 120. In some embodiments, step 410 is performed with respect to the user computer 110. In such embodiments the data may be received at the user computer 110 from a user such as via the user interface 111 of the user computer 110. Thus as a results of step 410 transaction data is received at least one of the user computer 110 or the server computer 120.

In step 420 a TO 500 is created or populated based on the data received in step 410. As noted above, the TO 500 may be created at one of the user computer 110 or the server computer 120. In some embodiments, as noted above, a representation of the TO 500 is created at the user computer 110. The representation of the TO 500 may be, for example, a JSON file or record which is communicated to the server computer 120. At the server computer 120 the TO 500 is created from the received representation. The TO 500 may be an instance of a transaction class representing the transaction which is to be entered into the data structure 320. Step 420 may comprise selecting a transaction type for the TO 500. The transaction type identifier 510 is indicative of the transaction type, as described above. Creating the TO 500 further comprises determining one or more transaction items 520, 530, 540 wherein each transaction item 520, 530, 540 comprises label or identifier for a type of the transaction item and a transaction item value 525, 535, 545. The transaction item value corresponds to the data received in step 410.

As part of step 420 the created TO 500 is provided to the posting engine 121 of the server computer 120. In embodiments where the TO 500 is created at the user computer 110, step 420 comprises communicating the TO 500 from the user computer 110 to the server computer 120 via the computer network 130. The received TO 500 is then stored in a memory of the server computer 120. Where the TO 500 is created at the server computer 120 the TO 500 is stored in the memory of the server computer 120 by the TOM 124.

In step 430 one or more posting rules are identified or selected. The one or more posting rules may be identified, at least in part, in dependence on one or more attributes of the TO 500 by the posting engine 121. The one or more posting rules may be identified, at least in part, in dependence on the transaction type of the TO 500. The transaction type, as indicated by the transaction type identifier 510 of the TO 500, may determine how the transaction is to be entered into, or posted to, the data structure 320 at the server computer 120. One or more posting rules to be utilised for posting the TO 500 to the data store 320 are selected from the CPR store 123 according to the identity information 113. One or more posting rules may be selected from the CPR store 123 according to the transaction type identifier 510. In some embodiments, at least some transaction types cause the server computer 120 to obtain further data associated with the transaction. For example, for at least some transaction types the server computer 120 may be arranged to request one or more additional items of information. In some cases, the server computer 120 may communicate the request to the user computer 110 which is arranged to request the data from the user, such as by displaying an additional field on a form for the user to enter the requested data. The request for information may be restricted to a selection of one or more predetermined tags. Each tag may be associated with one of a plurality of predetermined values. A request for additional information is indicated in Figure 4 by arrow 435. The additional information is associated with the TO 500 in step 420.

A plurality of rules may be selected in step 430. In some embodiments, a first posting rule may be selected for processing the header 501 of the TO 500. The first posting rule may be known as a header rule. One or more further posting rules may be selected from the CPR store 123 for processing the body 502 of the TO 500. In some embodiments a plurality of posting rules may be selected from the CPR store 123 for processing the body 502 of the TO 500. The one or more further posting rules for processing the body may be referred to as item rules as each rule is applied to the one or more items 520, 530, 540 forming the body 502 of the TO 500.

Once created, and supplemented with any additional information according to the one or more selected posting rules, the TO 500 is provided to the posting engine 121. The posting engine 121 is arranged to post 445 the transaction to the data store 320. In some embodiments, posting 445 the transaction to the data store 320 comprises a plurality of sub-steps 440, 450, 460 as illustrated in Figure 4.

Step 440 comprises the posting engine 121 interpreting one or more posting rules. The one or more posting rules are those selected in step 430. As noted above, the selected one or more posting rules may be associated with the identity information 113 and the transaction type 510 of the TO 500.

Step 450 comprises the posting engine 121 selecting one or more of the layers 330, 340 of the data storage structure 320 to which the transaction data is to be posted. At least one of the one or more posting rules selected in step 430 identifies one or more of the layers 330, 340 of the data storage structure 320 to which the transaction data 500 is to be posted. In some embodiments, the transaction data may be posted to one selected layer of the data storage structure 320. However in other embodiments the transaction data may be posted to two or more layers.

In some embodiments, the posting engine 121 is arranged to select a first posting rule from the CPR store 123 and to post the transaction data to a first layer 330 according to the first posting rule. The first layer may be one of the layers 330, 340 of the data storage structure 320. The posting engine 121 may be further arranged to select a second posting rule from the CPR store 123 and to post the transaction data to a second layer 340 according to the second posting rule. Each posting rule may cause different processing of the transaction data, wherein the processed transaction data is stored to each of the first and second layers.

In some embodiments, the posting engine 121 is arranged to evaluate the header rule for the TO 500. In some embodiments, only one header rule is evaluated by the posting engine 121 for each TO 500. In contrast, the posting engine 121 is arranged to evaluate each item rule for every item 520, 530, 540 forming the body 502 of the TO 500.

In some embodiments, as noted above, each posting rule comprises a plurality of portions or fields which define how the transaction data received from the user computer 110 is entered into the data storage structure 320. In particular, in some embodiments the posting rule may identify which of a plurality of data storage structures 320 the transaction is to be posted to by the posting engine 121. A posting rule may include a fixed UID value identifying the data storage structure to which the transaction data is to be posted. Alternatively, the data storage structure may be selected by referring to a dimension, which may be known as a posting rule dimension.

The posting engine 121 may operatively determine when an item rule is to be applied to an item 520, 530, 540 of the TO 500. Each posting rule may comprise one or more fields which filter when the respective posting rule is to be applied by the posting engine to one or more portions of the TO 500.

In some embodiments, each item rule comprises a definition of which of predetermined item types it should be applied to by the posting engine 121. The posting engine 121 may operatively determine when to apply each item rule to an item 520, 530, 540 of the TO 500. The item rule may define its application by the posting engine 121 to items 520, 530, 540 by Boolean logic. For example, the item rule may define that it is to be applied to all items 520, 530, 540 by an absence of definition such as *(blank),* or that it is to be applied to items 520, 530, 540 which *{match}* or *{no match}* a predetermined item type. A field of the item rule may contain a definition of the Boolean logic for the posting engine 121 to determine application of the item rule to one or more of the items 520, 530, 540 of the TO 500.

Each item rule may contain a definition of which of the layers 330, 340 the transaction data will be posted to. For example, a layer field of the item rule may contain a definition of one or more of the layers 330, 340 of the data structure 320 to which the posting engine 121 will post the transaction data. The field may define that an item 520, 530, 540 of the TO will be posted to all or only some of the layers 330, 340 of the data structure 320.

In some embodiments, one or more fields of a posting rule may define whether the posting rule is to be applied to a portion of the TO 500. In some embodiments, one or more fields of an item rule may define whether the item rule is to be applied to one or more items of the TO 500. The one or more fields may be referred to as applicable fields. Each applicable field may contain a definition which is used by the posting engine 121 to determine whether to apply the item rule to each item 520, 530, 540 of the TO 500. The definition in the applicable field may be evaluated by the posting engine against each item 520, 530, 540 of the TO 500. The applicable field may be evaluated to be TRUE or FALSE against each item 520, 530, 540 of the TO 500.

In some embodiments, one or more fields of the posting rule may define one or more posting rule dimensions. Each posting rule dimension may be associated with either a header or item rule. A posting rule dimension may be considered as a sub-posting rule in that one or more actions may be performed by the posting rule dimension.

In some embodiments, a field of the posting rule may identify that a dimension of the data structure should adopt a tag which is identified by the posting rule. The tag may be provided by the TO 500, such as contained in a field of the TO 500. The posting engine 121 may determine the type of the identified tag. If the tag is of the same type as the identified dimension, then the posting engine 121 may post the tag. However, if the tag is of a different dimension type, then the posting engine 121 is configured to determine a related tag. For example, if the tag identified by the posting rule, such as provided with the TO 500 is of a first type, such as identifying an entity, and the identified dimension is a second type, such as a region type, the posting engine 121 is arranged to determine the tag related to the identified tag but which is of the second type. The related tag is a tag of the same type as the identified dimension, but which is related to the tag identified in the TO 500. For example, the posting engine may determine a tag of the region type which is associated with the identified tag. If the identified tag is of the same type as the dimension, but the posting engine 121 determines that it has not previously been entered into the data structure 140, then the posting engine 121 creates a new tag of the same type as the dimension and stores the tag in the data structure 140. In some embodiments, the data structure 140 may be selected to not allow new tag values, in which case the posting engine 121 does not create the new tag. In some embodiments, an error notification may be generated by the posting engine 121.

In some embodiments, the TO 500 may identify that the posting engine 121 should automatically determine the tag, such as where the tag relates to an identifier. In such cases, the posting engine 121 may determine the tag as a next (such as incrementally) unused tag value. In some embodiments, a fixed tag may be identified by the posting rule.

Once the posting engine 121 has resolved the one or more posting rules, as in steps 440, 450, the posting engine 121 is arranged in step 460 to store data in the data structure 140. The data may be written into i.e. stored within the data structure 320 stored in the data store 140.

In some embodiments, at least one of the posting rules defines one or more processes to be applied to the transaction data. The one or more processes may define operations to the performed on the transaction data. The posting engine (121) is arranged to process the transaction data according to the one or more processes, i.e. to perform the one or more operations, and to post the processed transaction data to one or more of the plurality of layers 330, 340 identified by the posting rule.

Based on the data storage structure having the transaction data posted thereto i.e. stored within the data storage structure, the server computer 120 may generate a report based on transaction data from the plurality of layers, or from some selected layers of the data storage structure. The report may comprise transaction data stored within the respective layers.

In some embodiments, the server computer 120 is arranged to receive adjustment data from the client computer 110. The adjustment data may be defined in respective TO 500. The posting engine 121 is arranged to perform an adjustment process according to the adjustment data. The TO 500 may cause the posting engine to select one more posting rules from the CPR store 120 defining the adjustment process. The adjustment process may comprise the posting engine creating an adjustment layer within the data storage structure 320. The posting engine 121 may then populate the adjustment layer with transaction data from one or more other layers 330, 340 of the data storage structure 320 according to the adjustment data. The transaction data may be adjusted by the one or more posting rules i.e. one or more operations performed thereto by the posting engine 121 before being stored in the adjustment layer.

Advantageously embodiments of the present invention allow transaction data to be recorded in an improved manner. In some embodiments the recording of transaction data is improved by allocating the transaction to layers of the data storage structure, which allows the transaction data to be appropriately stored.

Embodiments of the present invention provide computer software which, when executed by a computer, is arranged to perform a method according to an aspect of the invention. The computer software may be stored on a computer readable medium. The computer readable medium may be non-transitory.

It will be appreciated that embodiments of the present invention can be realised in the form of hardware, software or a combination of hardware and software. Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape. It will be appreciated that the storage devices and storage media are embodiments of machine-readable storage that are suitable for storing a program or programs that, when executed, implement embodiments of the present invention. Accordingly, embodiments provide a program comprising code for implementing a system or method as claimed in any preceding claim and a machine readable storage storing such a program. Still further, embodiments of the present invention may be conveyed electronically via any medium such as a communication signal carried over a wired or wireless connection and embodiments suitably encompass the same.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings), may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed. The claims should not be construed to cover merely the foregoing embodiments, but also any embodiments which fall within the scope of the claims.

## Claims

1. A server computer (120), comprising:
a processor (105);
an interface (125) to receive transaction data indicative of a transaction from a client computer (110), the client computer (110) having an associated identity;
a posting rule data store (123) accessible to the processor storing one or more posting rules, and a data storage structure (320) for storing transaction data, wherein the data storage structure (320) comprises a plurality of layers (330, 340) each having an associated identity and comprising a plurality of data storage elements for each storing transaction data therein;
a memory (106) storing instructions that, when executed by the processor (105), cause the processor to execute a posting engine (121), the posting engine (121) being arranged to:
receive (410), via the interface (125), a posting request (500) comprising the transaction data from the client computer (110);
select (430), from the posting rule data store (123), one or more posting rules in dependence on the identity associated with the client computer (110) and the posting request (500), wherein at least one posting rule identifies one or more of the layers of the data storage structure (320) to which the transaction data (500) is to be posted; and
post (460) the transaction data to the selected one or more layers (320) according to the one or more posting rules.

2. The server computer (120) of claim 1, wherein the posting request (500) comprises data indicative of a transaction type, and the posting engine (121) is arranged to select the one or more posting rules at least partly in dependence on the transaction type of the posting request.

3. The server computer (120) of claim 1 or 2, wherein the posting engine (121) is arranged to select (430) the one or more posting rules at least partly in dependence on the transaction data (525, 535, 545).

4. The server computer (120) of claim 1 or 2, wherein:
at least one posting rule is associated with a dimension, wherein the dimension defines a class of transaction data; and
the posting engine (121) is arranged to associate (110 a tag with the transaction data in the data storage structure (320), wherein the tag defines an instance of the class.

5. The server computer according to claim 4, wherein posting engine (121) is arranged to request from the user computer (11) data indicative of the tag.

6. The server computer according to claim 4, wherein the posting engine (121) is arranged to determine the tag based on at least some of the transaction data (500).

7. The server computer (120) according to any of claims 4 to 6, wherein the posting engine (121) is arranged to determine whether a class of the tag matches the class of the dimension and, if not, to determine a tag of the class corresponding to the dimension.

8. The server computer (120) according to any preceding claim, wherein
at least one of the posting rules defines one or more processes to be applied to the transaction data; and
the posting engine (121) is arranged to process the transaction data according to the one or more processes and to post the processed transaction data to one or more of the plurality of layers identified by the posting rule.

9. The server computer according to any preceding claim, wherein the posting engine (121) is arranged to:
select a first posting rule from the data store in dependence on the identity associated with the client computer and the type of the transaction, and to post the transaction data to a first layer according to the first posting rule; and
select a second posting rule from the data store in dependence on the identity associated with the client computer and the type of the transaction, and to post the transaction data to a second layer according to the first posting rule.

10. The server computer according to claim 9, wherein the posting engine is arranged to:
process the transaction data according to the first posting rule and to post the processed transaction data to the first layer according to the first posting rule; and
process the transaction data according to the second posting rule and to post the processed transaction data to the second layer according to the second posting rule.

11. The server computer of any preceding claim, wherein the server computer (120) is arranged to receive adjustment data from the client computer (110), wherein the posting engine (121) is arranged to perform an adjustment process according to the adjustment data, the adjustment process comprising creating an adjustment layer and populating the adjustment layer with transaction data from one or more layers according to the adjustment data.

12. The server computer of any preceding claim, wherein the server computer (120) is arranged to receive from the client computer (11) metadata corresponding to the one or more posting rules to and to store the received metadata in the data store.

13. A method (400) of storing transaction data, comprising:
receiving (410), at a server computer (120) from a user computer (110), a posting request (500) comprising transaction data from the client computer (110);
selecting (430), from a posting rule data store (123), one or more posting rules in dependence on an identity associated with the client computer (110) and the posting request (500), wherein at least one posting rule identifies one or more layers of a data storage structure (320) at the server computer (120) to which the transaction data (500) is to be posted; and
posting (460) the transaction data to the selected one or more layers (320) according to the one or more posting rules.

14. Computer software which, when executed by a computer, is arranged to perform a method according to claim 13.
